# EUROPEAN PATENT APPLICATION

(11) **EP 1 462 907 A1**
(43) Date of publication of application: **29.09.2004**
(21) Application number: 03394034.7
(22) Date of filing: 25.03.2003
(51) Int. Cl.: G06F 1/00, H05K 1/02, G08B 13/12

(54) **A security enclosure for a circuit**

(71) Applicant: Bourns, Inc., Riverside, California 92507 (US)
(72) Inventor: Burke, Ray, Whitechurch, Co. Cork (IE); Queen, Karl, Passage West, Co. Cork (IE)
(74) Representative: Lane, Cathal Michael

(57) **Abstract**

The present invention relates to the field of enclosures for electronic circuits and in particular to applications, for example payment card systems, where it is necessary to provide some physical security to prevent unauthorised access to a circuit and more particularly to the data contained within memory devices in the circuit. The present invention provides an improved housing overcoming problems associated with prior art housing and in particular provides a housing that allows for replacement and/or repair of an underlying circuit at a relatively low cost. This is achieved by provision of a single piece construction security housing having conductive patterns integrally provided thereon. In particular, a first embodiment of the invention provides a security housing for mounting in use on a circuit board to protect an associated circuit, comprising: a plurality of electrical contacts for making electrical contact with the circuit board, a cover, a plurality of side walls, where the plurality of side walls and cover define a space for accommodating the associated circuit, and at least one pattern of conductive tracks electrically connected to the electrical contacts and integrally formed with the plurality of side walls and the cover in a single piece construction.

## Description

### Field of the Invention

The present invention relates to the field of enclosures for electronic circuits and in particular to enclosures intended to prevent unauthorised access to electronic circuits.

### Background to the Invention

In certain applications, for example payment card systems, it is necessary to provide some physical security to prevent unauthorised access to a circuit and more particularly to the data contained within memory devices in a circuit.

This is conventionally achieved by placement of the circuit to be protected within an enclosure. To enhance the mechanical security provided by these enclosures, detected interference with the enclosure triggers the protected circuit to perform one or more specific actions, including for example setting off an alarm and/or encrypting or erasing the data stored in circuit memory devices.

One method of detecting interference with an enclosure is sensing for any change in the ambient conditions within the enclosure, for example by means of a change in air pressure as exemplified by US 6,396,400 or by a the detection in the change of the ambient light within an enclosure as exemplified by US 4,155,077.

Another method of detecting interference is to surround the circuit with one or more patterns of conductors. These conductors are arranged so that any person attempting to interfere with the enclosure will break one or more of the conductors. Appropriate sensing circuitry is provided to detect a break in a conductor.

One known example of such a technique is to deploy a flexible circuit foil with a pattern of tracks printed thereon. As an alternative to the flexible circuit foil, a wire mesh may be wrapped around the circuit to form an enclosure. To add mechanical strength to the enclosure and to prevent bypassing of the conductors, the whole assembly may be encapsulated in a potting compound such as epoxy resin.

However, a weakness in this approach is that chemical substances may be used to remove the potting material, thus rendering the foil or mesh open to attack. In addition, potting material prevents both authorised as well as unauthorised access to the circuit, i.e. once a circuit is potted it can no longer be readily accessed for repair and maintenance purposes. This has the undesirable effect of increasing repair and replacement costs. Similarly, manufacturing yields are reduced since it is not feasible to re-work faulty circuits after encapsulation.

An alternative approach to encapsulation, as known from US 5,675,319, is to glue or otherwise fix the flexible circuit foil to an outer rigid cover. The outer rigid cover provides mechanical protection and because the flexible circuit foil is fixed to the cover, any attempt to remove the cover may result in the breakage of one or more of the conductors on the flexible foil. It is believed however that flexible foil circuits are relatively expensive and time consuming to assemble during manufacture.

EP 0,495,645 provides an alternative housing which provides for both detection and mechanical protection; in particular, it provides a housing formed by a top plate, a base plate and four upright side ceramic plates. Each of the ceramic plates has a serpentine pattern of conductors. The conductors on the side plates are interconnected with electrically conductive epoxy material and conductive tracks on an underlying circuit board. However, it is believed that the cost of ceramic and difficulties in assembly make this housing unsuitable for general use.

### Summary of the Invention

The present invention provides an improved housing that allows for replacement and/or repair of an underlying circuit. The improved housing also provides for simple assembly in a manufacturing process at a relatively low cost. This is achieved by provision of a single piece construction security housing having conductive patterns integrally provided thereon. In particular, a first embodiment of the invention provides a security housing for mounting in use on a circuit board to protect an associated circuit, comprising: a plurality of electrical contacts for making electrical contact with the circuit board, a cover, a plurality of side walls, where the plurality of side walls and cover define a space for accommodating the associated circuit, and at least one pattern of conductive tracks electrically connected to the electrical contacts and integrally formed with the plurality of side walls and the cover in a single piece construction.

The security housing may additionally comprise a flange having a mounting surface for mounting on the underlying circuit board. The side walls of the housing are interposed between the cover and the flange.

Conveniently, the contacts may be provided on the mounting surface of the flange. Suitably, a portion of the at least one pattern of conductive track may be provided parallel and adjacent to a corner between adjoining side walls.

In one embodiment, the at least one conductive pattern comprises one or more loops which commence from a track on a side wall extend on to the mounting surface of the flange and return onto another track on the side wall.

For enhanced security, the mounting surface of the flange may have a guard track provided thereon. The guard track may be interposed between the at least one conductive pattern at the peripheral edge of the flange. In use, the guard track would be connected to a non-reference voltage.

Suitably, the inner surfaces of the cover and\or side walls are planar. The cover and flange are suitably aligned in a parallel configuration. The side walls are substantially inclined relative to the cover, suitably at an angle of 20-70° and preferably at an angle of about 45°. Preferably, the housing material is plastic. The housing is substantially rigid compared to flexible foil circuits.

A further embodiment of the invention provides a circuit housing arrangement in which a circuit is protected by a security housing as described above.

In another embodiment, the present invention provides a method of manufacturing a security housing for protecting a circuit, comprising the steps of molding a housing comprising a cover and a plurality of side walls and using electromagnetic radiation to define a pattern of conductive tracks on surfaces of the cover and plurality of side walls.

The electromagnetic radiation may be used to ablate unwanted conductive material to define the pattern. Alternatively, the electromagnetic radiation may be used to break up non-conductive metal compounds into metal nuclei to define the pattern.

### Brief Description of the Drawings

The present invention will now be explained in greater detail with reference to the accompanying drawings in which:
FIG. 1 is a bottom view of a security housing according to the invention;
FIG. 2 is a front view of the security housing of FIG. 1;
FIG. 3 is a sectional view of the security housing of FIG. 1 in use;
FIG. 4 is an exemplary pattern for use with the housing of FIG. 1;
FIG. 5 is an exploded view of a corner portion of the housing of FIG. 1 with an exemplary track pattern for protecting the corner;
FIG. 6 is an exploded view of a side portion of the housing of FIG. 1 with an exemplary contact pattern;
FIG. 7 is an exploded view of a side portion of the housing of FIG. 1 with an alternative conductive pattern arrangement to that of FIG. 7;
FIG. 8 is a process flow diagram for a first method of manufacture according to the invention; and
FIG. 9 is a process flow diagram for a second method of manufacture according to the invention.

### Detailed Description of the Drawings

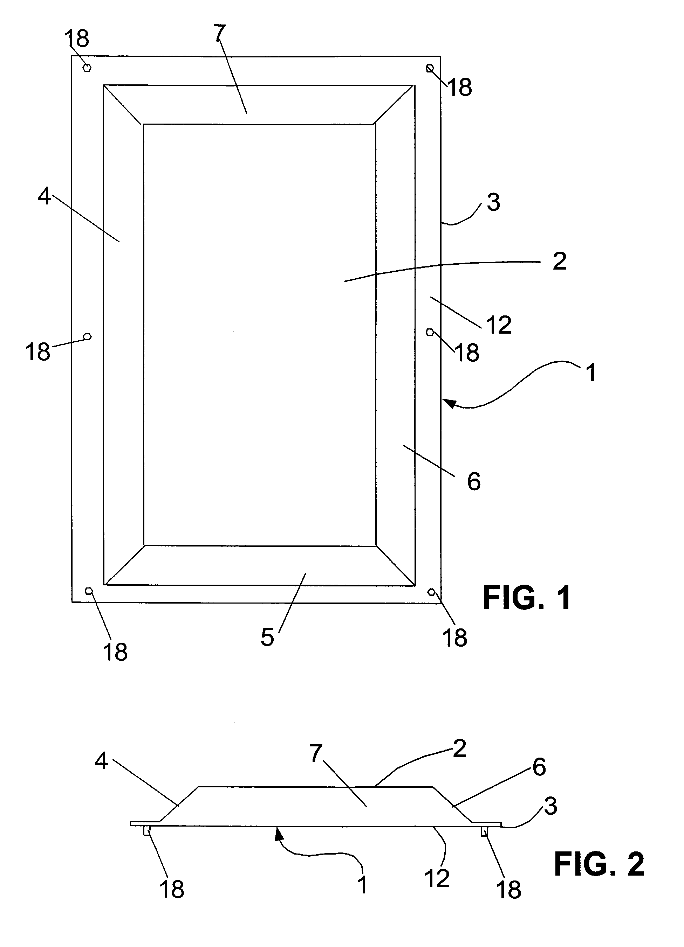

The present invention, as illustrated by the exemplary embodiment of FIGs. 1-3, provides a security housing 1 suitable for protecting a circuit 10. The housing 1 is a single piece construction comprising a cover 2, a flange 3 and a plurality of side walls 4,5,6,7. The side walls 4,5,6,7 are interposed between the flange 3 and the cover 2. The flange 3 extends outwardly around the edge of the housing 1. The flange 3 has a mounting surface 12 for mounting onto an underlying circuit board 14 associated with the circuit 10 to be protected.

In practice, the circuit 10 to be protected may comprise a group of components and tracks on the associated circuit board 14. Alternatively, the circuit 10 to be protected may comprise a separate circuit board mounted upon the associated circuit board 14.

To prevent interference with the circuit 10 through the associated circuit board 14, appropriate measures may be taken including the provision of one or more patterns of conductive tracks on one or more layers of the associated circuit board, so that any interference with the underlying circuit board may be detected. Suitably, the conductive tracks in the underlying circuit board are electrically connected to the conductive tracks of the housing (described below) to provide a complete electronic barrier to entry to the associated circuit.

The mounting surface 12 of the flange 3 is substantially planar such that in use 12 the flange sits flush upon a corresponding planar surface of the associated circuit board 14. The cover 2 of the housing 1 is raised relative to the flange 3 and in conjunction with the side walls 4,5,6,7 of the housing and, in use, the underlying circuit board 14 provides an enclosed space 16 in which the components of the circuit 10 to be protected may be accommodated. For ease of manufacture, the inner surfaces of the side walls, flange and cover should be substantially planar. Suitably, the flange 3 is disposed in a parallel alignment to the cover 2. Each of the side walls 4,5,6,7 are inclined relative to the flange. Suitably, the angle of incline between the flange and side walls is in the region of 20° to 70° for reasons which will become apparent from the exemplary methods of manufacture described below. Although, there is a trade-off between manufacturing complexity and the size of circuit that may be accommodated within the enclosed space 16, a preferred angle of incline is about 45°.

The housing 1 is suitably constructed out of an insulating material such as plastic. Alternatively, the housing may be constructed from a non-insulating material covered by a layer of insulating material. For example, the non-insulating material may be a pre-formed metal piece upon which a layer of insulating material has been molded (i.e. the pre-formed metal piece serves as the mold) for example by deposition or immersion. For reasons of manufacturing and/or use, which will become apparent from the exemplary methods described below, the housing material should be relatively rigid, i.e. the housing should retain its shape without support in contrast to flexible foil housings. Similarly, the housing should be somewhat resilient to applied pressure. This is important to negate the requirement for potting or other mechanical protection.

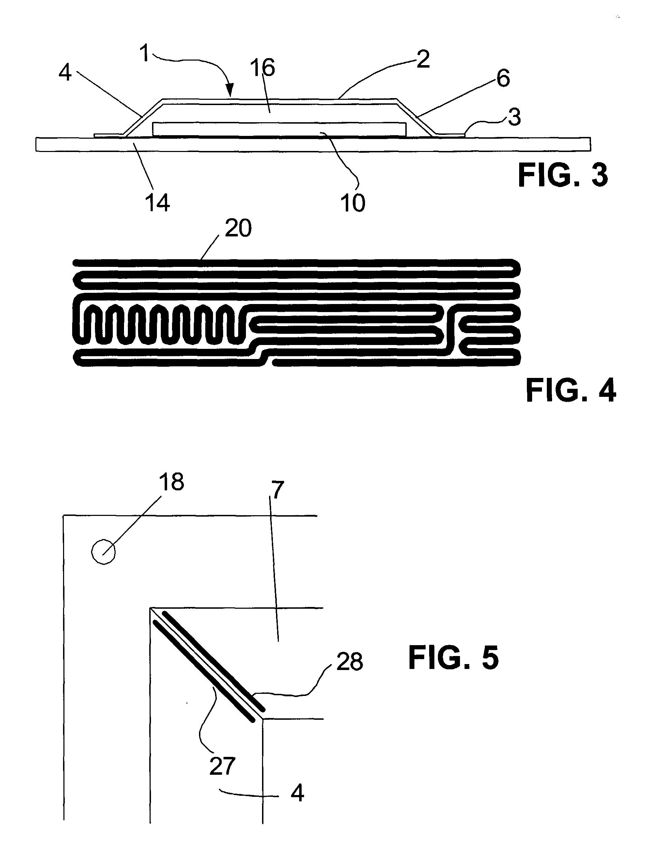

To facilitate the detection of interference by a third party with the housing at least one set of conductive tracks are provided on the inner surfaces of the cover 2 and side walls 4,5,6,7. For ease of illustration, the conductive tracks are not illustrated in FIG. 1. However, a section of an exemplary pattern of tracks 30 is shown in FIG. 4. This exemplary pattern of conductive tracks 20 is arranged in a serpentine fashion. The use of a serpentine pattern ensures that there are no vulnerable areas on the housing that may be attacked by mechanical means.

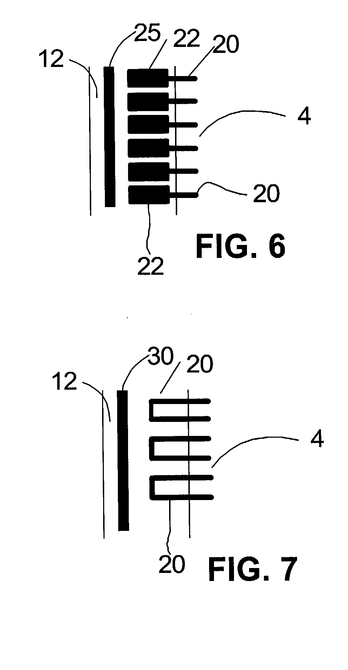

Each one of the conductive tracks 20 has a start point and an end point. These start and end points are defined, as shown in FIG. 6, by electrical contacts 22 provided on the mounting surface of the flange. In use these electrical contacts facilitate connections to the underlying circuit board. These connections ensure that a disruption in the continuity of the conductive tracks 20 may be detected by an appropriate detection circuit (not shown). Upon detection of a disruption, appropriate action taken to protect the circuit using techniques known in the prior art, for example setting off an alarm and/or erasing the data stored in circuit memory devices.

As will be appreciated from the exemplary methods of manufacture described below, the housing 1 is a single piece pre-formed construction that does not require assembly of individual components. Similarly, the housing is less vulnerable to attack than prior art security housings since there are no mechanical joints or overlaps between individual components of the housing.

To prevent undetected penetration of the housing by mechanical means, e.g. drilling, a combination of techniques may be used. Firstly, the width of the conductive tracks 20 is preferably narrower than the diameter of available drill bits, suitably in the range of 100 micron to 300 micron, preferably about 200 micron. Similarly, the spacing between adjacent tracks is designed to be less than the diameter of available drill bits. Suitably, this spacing is in the range 150-300 micron, preferably about 200 micron. Using these two restrictions ensures that any attempt to drill through the cover or side walls without breaking a track is defeated. Similarly, as described previously, the conductive tracks are laid out in a serpentine (snake-like) pattern to prevent a would-be attacker from identifying weaknesses potentially occurring from more conventional patterns.

The housing may have a number of locating features defined thereon to assist its placement on a circuit board during the assembly process. These features may include one or more lugs 18 intended to engage with corresponding apertures defined in the circuit board. The locating features may be configured to ensure that the housing may only be placed in one particular orientation, i.e. where the contacts 22 on the housing are placed on top of corresponding contacts on the circuit board. Alternatively, the contacts on the housing may be arranged to be symmetrical.

To operate as a security housing for a circuit, it is necessary to fix the housing 1 to the underlying circuit board 10 and to provide electrical connections between the contacts 22 of the housing and those of the underlying circuit board. These two requirements may be achieved simultaneously using a conductive material as both a fixative and as a conductor to adhere the security housing to the underlying circuit board. Suitable conductive materials include solder, conductive epoxy and z-axis tape (for example EL-9032-3 available from Adhesives Research Inc. of Glen Rock, Pennsylvania, USA). To prevent accidental shorting by the conductive materials such as solder, the materials are selectively deposited on the circuit board and/or housing. In the case of solder, this may be achieved using solder ball technology. Using materials such as z-axis tape, this is not necessary as the material is anisotropically conductive, i.e. the material only conducts in one direction (vertically between housing and underlying circuit board and not horizontally between contacts).

Conventionally, detection circuits for detecting a break in a conductive track are quite simple. In brief, a reference (non-zero) voltage is applied at the start of a conductor track, As long as the track remains intact, the reference voltage will appear at the end of the track. A simple comparator may be used to detect this reference voltage and to trigger an alarm in the event of its absence.

A particularly vulnerable area in respect of the prior art circuits is the corners of the housing where edges were joined. In flexible foil embodiments, this vulnerability may be mitigated using an overlap between adjoining surfaces. Nonetheless, the vulnerability is still present. In the present invention as the housing is a single piece construction, there is no gap or join present at the corner requiring protection by an overlap. Similarly, the housing has effectively the same strength in the corners as elsewhere. Additionally, it is possible to continue the conductive pattern from one side surface around a corner into an adjacent side wall, thus there is no vulnerable gap present at the corners. Although, the continuation of the conductive patterns from one side wall removes the potential of an attack at a corner, it adds to the complexity of manufacture of the housing. To simplify manufacturing and still mitigate against attack, an embodiment of the present invention, as shown in FIG. 5 (for ease of illustration only, the tracks adjoining the corner between side walls are shown; in practice the pattern will continue to effectively cover all vulnerable areas and in such a way that each track starts and ends at a contact), provides one or more tracks 27,28 of the conductive pattern 20 of tracks adjacent to the adjoining edge between side walls 4,7. The tracks are disposed is a substantially parallel configuration to the adjoining edge and are in close proximity to the edge (i.e. within the track spacing previously discussed), such that the space between the tracks on adjacent walls prevents an attack by drilling or other mechanical means. The advantage of this approach is that protection is provided by the conductive pattern of tracks which does not require a track to pass from one side wall to another side wall across an adjoining corner, which would increase the manufacturing time.

As the arrangement of narrow tracks closely spaced together provides an effective electronic barrier to entry through corners of the side walls, the only remaining area which may be vulnerable to attack is the flange. To protect the flange a number of special features may be used. In particular, the electrical contacts 22 for the start and end point of each of the conductive tracks may be separated from each other by a significant distance (to prevent bypassing the conductive pattern by shorting the contacts). Similarly, the start and end point of each conductive track may be separated by one or more end/start points for other conductive tracks.

Using contacts to prevent an attack by drilling sideways through the flange would normally necessitate that the distance between adjacent contacts should be less than that of the smallest drill bit normally available. Thus the separation between contacts on the mounting surface of the flange should be in the range 150-300 micron, preferably about 200 micron.

By locating the contacts a distance from the outer edge of the flange, space may be provided for a guard track 30. This guard track 30 which may conveniently be provided on the mounting surface of the flange adjacent to the outer edge provides a barrier which must be broken to get through to the electrical contacts 22 and/or conductive pattern 20. In use this guard track 30 is connected to a non reference voltage (for example ground). If an attacker attempts to drill through the flange with a conventional metal drill bit, the drill bit will initially make contact with the guard track. Mere disruption of the guard track will not trigger an alarm. However, continued drilling may cause the drill bit to make subsequent contact with the one or more electrical contacts and/or the conductive tracks, thus connecting the non-reference voltage of the guard rail to the track, which is immediately detectable by the above described detector circuits.

The minimum spacing required between contacts and adjacent tracks including the guard track is determined by the particular method and material used for making electrical contact between the contacts of the housing and the corresponding contacts on the circuit board, i.e. the potential spread of the conductive material (solder, adhesive) limits the minimum spacing. An optional masking feature, which may be used to mask one or more of the electrical contacts on the housing, minimises the minimum spacing required whilst ensuring that spread of conductive material will not cause a short between the contact and an adjoining track or contact on the housing. This masking feature provides an insulation barrier on the area of the housing immediately surrounding each electrical contact. The insulation barrier does not cover the electrical contact itself, i.e. the insulation barrier provides a masking region of insulation material, for example a thin ring, around each of the electrical contacts. The insulating material may be any suitable material including for example polymer and dielectrics materials. The insulating material may be applied by any suitable method, including for example but not limited to screen printing. As the insulating material does not cover the contacts, the insulating barrier does not interfere with the provision of electrical connections between the contacts of the housing and the underlying circuit board. The insulating barrier does however prevent the spread of conductive material establishing this contact and/or small misalignments with the underlying circuit board from causing undesirable shorts to other tracks or contacts on the housing. The dimensions of the insulating barrier will depend on a variety of factors including for example the process used to form the barrier, the size of the electrical contacts and the degree to which the conductive material selected spreads.

Although providing a significant number of contacts 22 on the mounting surface of the flange with associated tracks on the side walls and cover and corresponding contacts on the underlying circuit enhances the security of the housing by ensuring there are no vulnerable gaps around the edge of the housing, the reliability of the assembly process may be less than desirable. The primary reason for this arises from the necessity of ensuring that proper electrical connections are provided between each contact on the flange and a corresponding contact on the underlying circuit board. The greater the number of contacts provided, the lower the overall reliability.

A further embodiment of the invention significantly increases the reliability of the manufacturing process by reducing the number of contacts required. Referring to FIG.7, which illustrates a section of the mounting surface of the flange and an adjoining side wall, it will be seen that tracks 20 of the conductive pattern are disposed in a loop arrangement, whereby each track passing from a side wall 4 to the flange 12 is looped back onto a track on the surface of side wall 4. Any attempt to penetrate the housing 1 by drilling through the flange will cause a disruption in one or more of the loops (i.e. one of the conductive tracks) which may be detected as described above and/or the connection of the guard track to one or more of the conductive tracks. It will be appreciated that in this embodiment, the necessity for a large number of contacts to the underlying circuit board is reduced. In practice, the number of contacts may be reduced to two, with a first contact providing a start point on a conductive track to which a reference voltage may be connected and an end point to which a detection circuit may be connected. To prevent access to the circuit by separating the surface of the flange from the surface of the underlying circuit board an adhesive may be used to fix the mounting surface of the flange to the surface of the underlying circuit board. To prevent shorting between the loops and the guard track, a non-conductive adhesive (e.g. a suitable epoxy) may be used. However, to provide an electrical connection between the contacts of the security housing and the underlying circuit board, a conductive adhesive is selectively used for fixing the surface areas with contacts to corresponding contacts on the underlying circuit board.

The adhesive qualities of the non conductive adhesive should be selected to provide a greater adhesive force between the adhesive and tracks than the adherence force between the tracks and the housing. In this way, any attempt to lift the surface of the housing will cause tracks to break away from the housing, thus disrupting the conductive pattern.

The present invention relies on the use of a plastic housing having at least one pattern of conductive tracks formed on the inner surface thereof to provide an electronic barrier to entry through the housing. Two exemplary methods for manufacturing the housing will now be described, in which the two methods share a common first stage in a process which may be regarded as comprising two basic stages. The first stage of the process is the molding of the security housing and the second stage of the process uses electromagnetic radiation in the form of a laser to define a pattern of conductive tracks on the inner surfaces of the cover, flange and side walls.

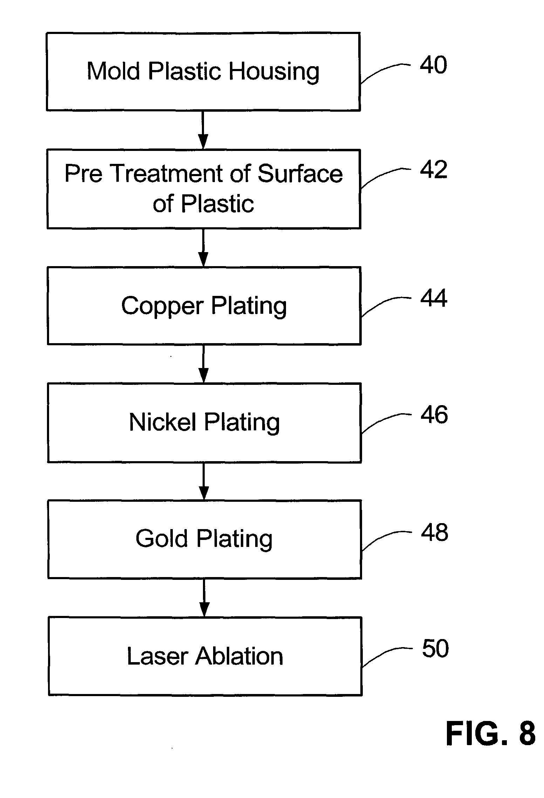

The latter step of defining a pattern of conductive tracks may use a laser to either remove metal from unwanted areas or to provide metal in desired areas. The use of a laser to ablate metal, herein after referred to as the subtractive method, will now be described with reference to FIG 8. The method commences with the use of a suitable plastics, for example injection, molding process 40 to produce the desired shape for the security housing.

The resulting plastic housing is then plated with metal. As the plastic housing is to be plated with a metal, it is preferable that the plastics material selected for the housing is amenable to plating. Suitable plastics include Thermoplastic Liquid Crystal Polymer, commonly known as LCP, for example VECTRA E820i or VECTRA LP1156 as supplied by Ticonia of Frankfurt am Main Germany.

In order to facilitate the plating of the plastic material with metal, it is beneficial to chemically pre-treat 42 the plastic. It will be appreciated to those skilled in the art that a variety of techniques are available and the exact process selected will depend on a number of factors including the particular plastic material selected. Thus the following pre-treatment chemical steps should be treated as purely exemplary and in no way limiting. A first step in the chemical pre-treatment is the softening of the surface of the plastic to receive a chemical etch, for example by immersion of the housing in a solution of ENVISION MLB, available from Enthone, Inc., West Haven, Connecticut, USA, for 10 minutes at a temperature of 65°C. A next step is the etching of the surface of the plastic. This etching step is to provide microscopic holes in the surface of the plastic which serve as bonding sites for subsequent metal plating. A suitable etch for this process is immersion in a solution of Potassium Permanganate Etch (KMnO₄), also available from Enthone, Inc. for 20 minutes at a temperature of 80°C. After the etching stage, any trace of remaining etch may be removed by immersion in a KMnO₄ Neutraliser solution, for example for 5 minute at a temperature of 65°C. The plastic may then be processed in an activator to enhance activation and produce a change in the surface charge of the plastic. A suitable process for example would be immersion for three minutes at room temperature in a solution of ACTIVATOR 850 Predip (also available from Enthone, Inc.).

The plastic housing may then be immersed in an activator such as a stannous chloride colloidal solution, for example for five minutes at room temperature in a solution of ACTIVATOR 850 also available from Enthone, Inc., so as to provide catalytic sites on the surface of the plastic. Immersion in a further solution, for example for three minutes in a solution of ACCELERATOR 860 (also available from Enthone, Inc.), may be used to improve the initial deposition rate of the subsequent plating process and to promote dense fine grained deposits. This solution also removes excess stannous chloride from the previous activation step. These initial steps prepare the plastic for plating. The plating process 44 commences with the electroless plating of the plastic using a copper electroless plating solution. A suitable copper electroless plating solution is Cu 872 (also available from Enthone, Inc.), as it produces a uniform fine grained deposits which and have a low stress level to ensure adhesion. A suitable immersion time is fifteen minutes at a temperature of 60°C.

As copper surfaces are not autocatalytic to nickel, it is necessary to use an initiator solution, for example Initiator 852, also available from Enthone, Inc., for 1 minute at room temperature, to deposit 46 a thin metallic film on the surface of the copper. This thin metallic film promotes the formation of a dense adherent fine grained deposit in the subsequent plating process.

The plastic housing may then be plated with nickel in an electroless nickel plating process. A suitable electroless plating process is immersion in a solution of NI 418 also available from Enthone, Inc., for 1 minute at room temperature. This exemplary solution is a stable, medium phosphorous content Nickel that produces semi-bright deposits with good wear properties.

After the nickel plating process, the housing may be plated 48 with a layer of gold in a gold electroless plating process. A suitable electroless plating process is immersion in a solution of Ormex Au, available from Schlotter of Geislingen, Germany for five minutes at a temperature of 90°C.

It will be appreciated by those skilled in the art, that the process may include a number of other conventional steps for example the use of a deionized water (DI) rinse between each of the steps above. Similarly, it will be appreciated that several variations are possible and the invention is not intended to be limited to the exact process steps described. For example, the nickel and gold plating process steps and the associated pre-treatment may be replaced by a tin plating process as tin is autocatalytic to copper.

Once the plastic housing is plated with a metal (either copper, tin, nickel or gold), a laser may be used to form a pattern of conductive tracks on the plastic by removal (burning off) of unwanted metal. A suitable process for the removal of this metal is the use of an infra red laser with a three dimensional scanning head to allow structuring in three dimensions, for example of the types available from LPKF of Garbsen, Germany. An infra red laser although having poorer line definition is preferred to the use of an ultra violet laser because of significantly reduced processing times. The plating processes described above will conventionally coat the entire plastic housing with a plating of metal, whilst the metal on the inside of the housing provides for the pattern of conductive tracks, the plating material on the outside need not be regarded as unwanted as it does not interfere the conductive pattern on the inside surfaces of the housing. Moreover, it may be used as a guard surface by connection to a non reference voltage as described above.

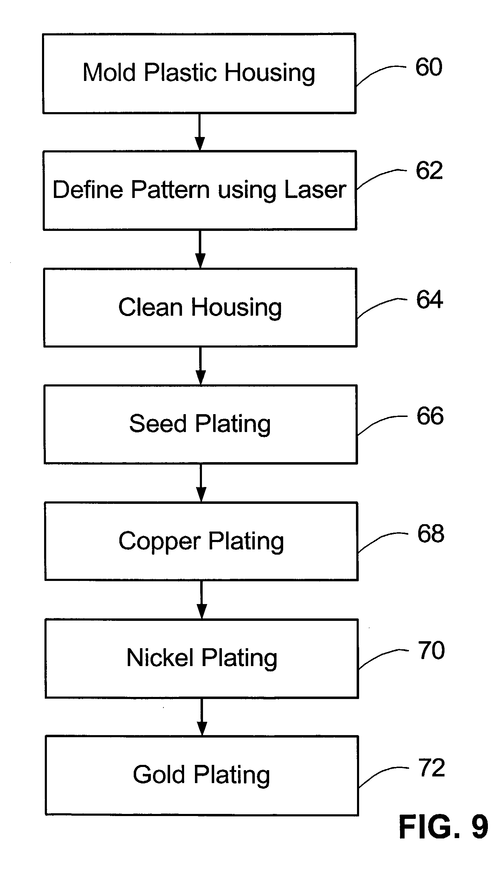

An alternative process for making the housing as shown in FIG. 9, uses a plastics molding process and a process of laser direct structuring. However, in this process the laser is used to define areas where tracks are required rather than to remove material in areas where it is not wanted. This process uses an electrically non-conductive supporting material (i.e. a plastic), having electrically non-conductive metal compounds contained therein in a dispersed manner. Electromagnetic radiation (e.g. as produced by a laser) may be used to break up the non-conductive metal compounds into metal nuclei where tracks are required. These metal nuclei may then be used as a base for subsequent moralization steps. This process will now be described in greater detail. The process commences with a suitable material comprising an electrically non-conductive supporting material having electrically non-conductive metal compounds contained therein in a dispersed manner. An example of such a plastics material is Polybutyleneterephthalate PBT which has contains suitable electrically non-conductive metal compounds, available from LPKF Gmbh of Garbsen, Germany. This material is injection molded 60 using conventional plastics molding techniques into the shape of the required security housing. A laser having a suitable three-dimensional function as described above, is used to define 62 the pattern of the conductive tracks on the surfaces of the security housing, i.e. the laser is directed to areas where a conductive trace is required. This process, as described in US 6,319,564, breaks the nonconducting metallic bonds into conductive metal nuclei in these areas. These metal nuclei serve as a base for subsequent plating steps, whereas in the non-exposed areas no plating will occur. The plating process starts with an initial step of removing 64 loosely bound ablation debris, arising from the laser process, from the surface of the housing. This step may be performed by immersion in an alkaline solution (e.g. 1 M NaOH for five minutes at 80°C). To thoroughly clean the surface, the housing may be immersed in a DI solution and subjected to ultrasonic vibration. The ultrasonic vibrations produce high intensity shock waves that penetrate right down to the surface porosity of the housing to ensure clean surface. To improve the efficiency of the plating process, an initiator solution may be used as described above (Initiator 852, available from Enthone, Inc.). The next step is the plating 66 of the plastic with a seed layer of copper. The plating solution used for this should be suitable for activation by the metal nuclei freed in the plastic. In the case of the above mentioned PBT material, this means a Pd- activated solution. An exemplary seed plating solution is Cu 9060 available from Enthone. This step provides a seed copper layer in areas where the laser has freed nuclei (i.e. where metal tracks are required). This seed layer may be thickened using a further copper plating process 68, for example using Cu 872 solution, described above, for fifteen minutes at 60°C.

As described above, copper surfaces are not autocatalytic to nickel and thus an initiator solution, for example Initiator 852 for 1 minute at room temperature, may be used to deposit a thin metallic film on the surface of the copper. This thin metallic film promotes the formation of a dense adherent fine grained deposit in the subsequent nickel plating process 70.

The plastic housing may then be plated with nickel in an electroless nickel plating process 70 as described above in respect of the subtractive method.

After the nickel plating process, the housing may be plated with a layer of gold in a gold electroless plating process 72 as described above in respect of the earlier described subtractive process.

An essential step in both processes is the use of a electromagnetic source, i.e. a laser, to define the conductive pattern either by removal of unwanted material or by freeing conductive material (by breaking the bonds of non-conductive metallic compounds). In both processes, a laser must be controlled to define the conductive pattern. To simplify the laser control, it is preferable that all of the surfaces are substantially planar, and that the angle between the cover/flange and side walls are not at 90° so that the laser may be directed from directly overhead.

In both of the alternative manufacturing processes, three dimensional features may be included in molding process. Thus for example, product marking may be provided on the surface of the housing.

The additive process causes a small dip in areas where the tracks are formed. This dip is not a significant issue when conductive glues are used to fix the housing to an underlying circuit board. However, when Z axis tape or solder is used, it may be beneficial if the effect of the dips could be negated. This is possible by providing three dimensional features, i.e. small raised areas in the surface of the flange, in the molding process in regions where the contacts will be defined. These small raised areas will effectively be removed after the laser definition process.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A security housing for mounting in use on a circuit board to protect an associated circuit, comprising:
a plurality of electrical contacts for making electrical contact with the circuit board,
a cover,
a plurality of side walls, where the plurality of side walls and cover define a space for accommodating the associated circuit, and
at least one pattern of conductive tracks electrically connected to the electrical contacts and integrally formed with the plurality of side walls and the cover in a single piece construction.

2. A security housing according to claim 1, further comprising a flange having a mounting surface for mounting on the underlying circuit board.

3. A security housing according to claim 2, wherein the contacts may be provided on the mounting surface of the flange.

4. A security housing according to any one of claims 1 to 4, wherein the inner surfaces of the cover and\or side walls are planar.

5. A security housing according to any preceding claim, wherein the side walls are substantially inclined relative to the cover, suitably at an angle of 20° to 70°.

6. A security housing according to claim 5, wherein the angle is about 45°.

7. A security housing according to any preceding claim, wherein the housing material is plastic.

8. A security housing according to any preceding claim, wherein the at least one conductive pattern comprises one or more loops which commence on a side wall extend on to the mounting surface of the flange and return onto the side wall.

9. A security housing according to any preceding claim, wherein the mounting surface of the flange is provided with a guard track.

10. A method of manufacturing a security housing for protecting a circuit, comprising the steps of: molding a housing comprising a cover and a plurality of side walls and using electromagnetic radiation to define a pattern of conductive tracks on surfaces of the cover and plurality of side walls.

11. A method of manufacturing a security housing according to claim 10, wherein the electromagnetic radiation is used to ablate unwanted conductive material to define the pattern.

12. A method of manufacturing a security housing according to claim 10, wherein the electromagnetic radiation is used to break up non-conductive metal compounds into metal nuclei to define the pattern.
